# EUROPÄISCHE PATENTSCHRIFT

(11) **EP 2 766 884 B1**
(45) Veröffentlichungstag und Bekanntmachung des Hinweises auf die Patenterteilung: **03.02.2016**
(21) Anmeldenummer: 12773211.3
(22) Anmeldetag: 25.09.2012
(51) Int. Cl.: G07C 9/00, B60R 25/24, B60R 25/045

(54) **VERFAHREN ZUM BETREIBEN EINER BERECHTIGUNGSEINRICHTUNG FÜR SCHLÜSSELLOSEN ZUGANG UND START EINES FAHRZEUGS**
METHOD FOR OPERATING AN AUTHORIZATION DEVICE FOR A KEYLESS ACCESS TO AND START OF A VEHICLE
PROCÉDÉ POUR FAIRE FONCTIONNER UN DISPOSITIF D'AUTORISATION POUR L'ACCÈS ET LE DÉMARRAGE SANS CLÉ D'UN VÉHICULE

(30) Priorität: 14.10.2011 DE 102011116157
(43) Veröffentlichungstag der Anmeldung: 20.08.2014
(73) Patentinhaber: Audi AG, 85045 Ingolstadt (DE)
(72) Erfinder: LEDENDECKER, Ingo, 85114 Buxheim (DE)
(74) Vertreter: Brandt, Kai
(86) Internationale Anmeldenummer: PCT/EP2012/004006
(87) Internationale Veröffentlichungsnummer: WO 2013/053429

(56) Entgegenhaltungen:
- WO-A1-2012/119681
- DE-A1- 10 354 646
- DE-A1- 19 927 253
- DE-A1- 19 937 915
- DE-A1-102011 050 160
- FR-A1- 2 786 802

## Beschreibung

Die Erfindung betrifft ein Verfahren zum Betreiben einer Berechtigungseinrichtung für schlüssellosen Zugang und Start eines Fahrzeugs, umfassend einen tragbaren ID-Geber, mit dem die Berechtigungseinrichtung eine drahtlose Kommunikationsverbindung zum Austausch von Datentelegrammen aufbauen kann.

Derartige Berechtigungseinrichtungen werden im Fahrzeugbau zur komfortablen Überprüfung einer Identität eines ID-Gebers verwendet und sind unter anderem auch als passive keyless-entry/-go Systeme bekannt. Dabei wird von der Berechtigungseinrichtung über geeignete Sende-/Empfangsmittel eine drahtlose Kommunikationsverbindung mit begrenzter Reichweite zu tragbaren ID-Gebern innerhalb dieser Reichweite aufgebaut. Berechtigungseinrichtung und ID-Geber tauschen daraufhin Datentelegramme miteinander aus, um die Berechtigung des ID-Gebers für dieses spezifische Fahrzeug festzustellen.

Es besteht jedoch die Möglichkeit, dass Kriminelle die Reichweite der Kommunikationsverbindung stark vergrößern und dadurch ein Austausch von Datentelegrammen zwischen ID-Geber und Berechtigungseinrichtung über weite Entfernungen stattfindet (sog. Relaisattacke). So ist es beispielsweise denkbar, dass ein Krimineller sich mit Sende-/Empfangsmitteln neben einem geparkten Fahrzeug platziert und ein weiteres Sende-/Empfangsmittel in der Nähe des passenden ID-Gebers, beispielsweise an einer Haus- oder Wohnungstür, Garderobe, etc., platziert. Durch die unauffällig erhöhte Reichweite kann sich der Kriminelle am Fahrzeug Zugang zu diesem verschaffen und den Motor starten.

In dem Dokument DE 199 37 915 A1 ist ein elektronischer Schlüssel zum berührungslosen Entriegeln eines Kraftfahrzeugs mit einer Sendeeinheit zum Aussenden eines Identifikationssignals bei Auftreten eines Anregungssignals beschrieben. Bei Übereinstimmen des Identifikationssignals mit einem im Kraftfahrzeug gespeicherten Signal wird im Kraftfahrzeug ein Ansteuersignal an die Zentralverriegelung zum Öffnen bzw. zum Schließen der Fahrzeugtüren und/oder an eine Wegfahrsperre zur Aktivierung bzw. Deaktivierung des Antriebs des Kraftfahrzeugs ausgegeben. Bei Ausbleiben einer Bewegung des Schlüssels für eine vorgegebene Zeitdauer wird der Schlüssel abgeschaltet.

In dem Dokument FR 2 786 802 A1 ist ein Funkschlüssel mit Bewegungsdetektor offenbart, wobei der Funkschlüssel einen Empfänger aufweist, der nur aktiviert wird, falls zuvor durch den Bewegungsdetektor eine Bewegung des Funkschlüssels erkannt worden ist.

In dem Dokument WO 2012/119681 A1 ist eine mobile Sendevorrichtung eines Zugangssystems eines Fahrzeugs beschrieben, welche einen Sender zum Senden eines Zugangsfreigabesignals zur Freigabe eines Zugangs zu dem Fahrzeug aufweist. Eine Verarbeitungseinheit der Sendevorrichtung ist dazu ausgelegt, in Abhängigkeit von einem erfassten Bewegungszustand und einem ersten Aufforderungssignal mittels des Senders ein erstes Zugangsfreigabesignal zu senden und in Abhängigkeit von einem zweiten Aufforderungssignal und unabhängig von dem erfassten Bewegungszustand mittels des Senders ein zweites Zugangsfreigabesignal zu senden. Eine Zugangssteuervorrichtung des Fahrzeugs ist dazu ausgelegt, einen ersten Zugang zu dem Fahrzeug in Abhängigkeit von dem ersten Zugangsfreigabesignal des Senders und einen zweiten Zugang zu dem Fahrzeug in Abhängigkeit von dem zweiten Zugangsfreigabesignal freizugeben. Der erste Zugang kann beispielsweise eine Zentralverriegelung des Fahrzeugs, der zweite Zugang kann beispielsweise eine Freigabe einer Zündanlage des Fahrzeugs sein.

In dem Dokument DE 10 2011 050 160 A1 ist ein Identifikationsgeber eines Schließsystems eines Fahrzeugs beschrieben, welcher einen Bewegungssensor aufweist, der zur Sensierung einer Bewegung des Identifikationsgebers ausgebildet ist. Es ist vorgesehen, dass wenigstens eine Empfangseinheit des Identifikationsgebers durch einen Mikrocontroller abgeschaltet wird, wenn der Bewegungssensor während einer Mindestzeitdauer eine Bewegungslosigkeit des Identifikationsgebers sensiert.

Aus dem Dokument DE 103 54 646 A1 entnimmt der Fachmann die Lehre, dass bei einem Fahrberechtigungssystem eine Fahrzeugs systemseitig erkannt werden soll, dass sich eine nutzungsberechtigte Freigabeeinrichtung in der Nähe des Fahrzeugs befindet und dann sowohl das Fahrzeug entriegelt als auch der Motorstart freigegeben wird.

Die gattungsbildende DE 199 27 253 A1 offenbart ein Verfahren zur Durchführung einer Berechtigungsüberprüfung zwischen einem Steuergerät und einem tragbaren, drahtlos mit dem Steuergerät kommunizierenden Transponder. Bei Durchführung einer Berechtigungsüberprüfung wird zusätzlich überprüft, ob der Transponder während eines vorbestimmten Zeitintervalls vor Durchführung der Berechtigungsüberprüfung bewegt worden ist oder nicht. Der Transponder sendet seine Identitätskennung nur dann, wenn während des vorbestimmten Zeitintervalls eine oberhalb eines bestimmten Schwellwerts liegende Transponderbewegung erfasst worden ist. Somit kann eine Relaisattacke nicht auf längere Zeit ruhende Transponder durchgeführt werden. Nachteilig ist jedoch, dass sich dieses Verfahren in der Praxis nur für die Zugangsberechtigung, nicht jedoch für die Startberechtigung, einsetzen lässt. Verweilt der Fahrer beispielsweise längere Zeit bei ausgeschaltetem Motor im Fahrzeug, dann würde der nach Verstreichen des Zeitintervalls deaktivierte Schlüssel einen Motorstart so lange verhindern, bis dieser wieder durch eine Bewegung aktiviert wird. Dies stellt eine erhebliche Komforteinbuße dar.

Aufgabe der vorliegenden Erfindung ist es daher ein Verfahren zum Betreiben einer Berechtigungseinrichtung für Zugang und Start eines Fahrzeugs bereitzustellen, das einen guten Schutz vor einer Relaisattacke bei gleichzeitig hohem Komfort für den Benutzer bietet.

Diese Aufgabe wird durch die Merkmale des Patentanspruchs 1 gelöst.

Ein Fahrzeug mit einer Berechtigungseinrichtung, die mit einem erfindungsgemäßen Verfahren betrieben wird, wird in Patentanspruch 5 beansprucht.

Verfahren zum Betreiben einer Berechtigungseinrichtung für schlüssellosen Zugang und Start eines Fahrzeugs mit einem tragbaren ID-Geber, der einen Bewegungssensor aufweist, wobei zwischen Berechtigungseinrichtung und ID-Geber eine drahtlose Kommunikationsverbindung zum Austausch von Datentelegrammen aufgebaut werden kann und wobei der schlüssellose Zugang zum Fahrzeug nur dann zulässig ist, wenn ein Zeitpunkt einer von dem Bewegungssensor erfassten, letztmaligen Bewegung des ID-Gebers innerhalb eines festgelegten Zeitintervalls liegt und wobei die Berechtigungseinrichtung den schlüssellosen Start des Fahrzeugs nur dann zulässt, wenn zuvor der schlüssellose Zugang zum Fahrzeug zugelassen wurde.

Indem ein schlüsselloser Start eines Motors des Fahrzeugs immer dann möglich ist, wenn zuvor ein schlüsselloser Zugang zum Fahrzeug gewährt wurde, entfällt die Notwendigkeit einer erneuten Überprüfung des Bewegungssensors des ID-Gebers für den Startfall, da mit hoher Wahrscheinlichkeit bereits eine legitime Benutzung festgestellt werden konnte. Der Benutzer kann somit das Fahrzeug mit dem gewohnten Komfort eines schlüssellosen Zugangssystems öffnen, beispielsweise indem er seine Hand um einen Türgriff einer Fahrzeugtür legt, was von einem in dem Türgriff verbauten kapazitiven Sensor erfasst wird. Mit schlüssellos ist vorliegend also der Zugang oder Start ohne aktive Betätigung des ID-Gebers gemeint. Das Erkennen einer an den Türgriff angelegten Hand triggert den Aufbau der drahtlosen Kommunikationsverbindung zwischen Berechtigungseinrichtung und ID-Geber zum Austausch der für die Berechtigungsprüfung notwendigen Datentelegramme. Die drahtlose Kommunikationsverbindung wird vorzugsweise durch ein fahrzeugseitiges Sende-/Empfangsmittel und ein damit korrespondierendes Sende-/Empfangsmittel im ID-Geber realisiert. Ein tatsächlich erfolgter schlüsselloser Zugang zum Fahrzeug kann beispielsweise durch die Entriegelung einer Fahrzeugtür erkannt und in der Berechtigungseinrichtung hinterlegt werden. Der schlüssellose Start des Fahrzeugs ist dann so lange möglich, bis die Fahrzeugtüren wieder zentral verriegelt wurden. Der Start des Fahrzeugs bzw. dessen Motor, kann durch eine Wegfahrsperre und/oder ein Motorsteuergerät geregelt werden. Die Überprüfung des Zusammenhangs von Zeitpunkt und Zeitintervall kann entweder durch die Berechtigungseinrichtung oder den ID-Geber erfolgen. So ist es beispielsweise möglich, dass der ID-Geber bei einem außerhalb des Zeitintervalls liegenden Zeitpunktes keine oder eine negative Antwort an die Berechtigungseinrichtung sendet.

Erfindungsgemäß empfängt die Berechtigungseinrichtung den Zeitpunkt vom ID-Geber und gleicht diesen mit dem Zeitintervall ab. Der Abgleich zwischen Zeitpunkt und Zeitintervall erfolgt somit fahrzeugseitig in der Berechtigungseinrichtung. Eine Kommunikationsverbindung zwischen Berechtigungseinrichtung und ID-Geber ist dementsprechend unabhängig vom Verhältnis zwischen Zeitpunkt und Zeitintervall immer möglich. Die Berechtigungseinrichtung entscheidet dann als Ergebnis des Abgleichs, ob ein Zugang zum Fahrzeug gewährt wird (Zeitpunkt innerhalb Zeitintervall) oder verwehrt bleibt (Zeitpunkt außerhalb Zeitintervall).

In einer bevorzugten Ausführung ist nur derjenige ID-Geber zum schlüssellosen Start zugelassen, dem zuvor der schlüssellose Zugang gewährt wurde. Dies erhöht die Sicherheit weiter, da der natürliche Ablauf einer Inbetriebnahme des Fahrzeugs mit Annäherung an das Fahrzeug, Entriegelung der Fahrzeugtüren und Starten eines Motors des Fahrzeugs in der Regel mit demselben ID-Geber durchgeführt wird. Eine Anomalie durch die Benutzung verschiedener ID-Geber für Zugang und Start begründet einen Verdachtsmoment, dem durch diese Maßnahme entgegengewirkt werden kann.

In einer bevorzugten Ausführung ist der schlüssellose Start nach einem manuellen Zugang mit demselben ID-Geber immer zugelassen. Unter manuellem Zugang kann in diesem Zusammenhang sowohl die Benutzung eines an dem Fahrzeug verbauten mechanischen Schlosses mit einem in den ID-Geber integrierten Schlüssel oder eine durch den Benutzer, beispielsweise durch Tastendruck am ID-Geber, initiierte Entriegelung der Fahrzeugtüren verstanden werden.

In einer bevorzugten Ausführung wird das Zeitintervall mittels eines RC-Gliedes überwacht. Der bei einer erfassten Bewegung des ID-Gebers aufgeladene Kondensator entlädt sich in Ruhe langsam wieder über den Widerstand. Die verbleibende Restspannung im Kondensator gibt Aufschluss darüber, ob der Zeitpunkt noch innerhalb des Zeitintervalls liegt. Dadurch kann das Zeitintervall rein in Hardware ohne die Zuhilfenahme von Software überwacht werden.

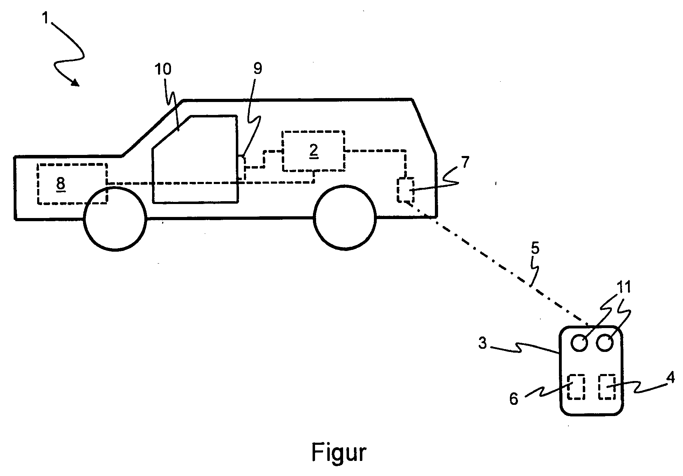

Weitere Einzelheiten und Vorteile der Erfindung ergeben sich aus der nachstehenden Beschreibung eines bevorzugten Ausführungsbeispiels unter Bezugnahme auf die Zeichnung.

Darin zeigt die Figur eine schematische Ansicht eines Fahrzeugs mit Berechtigungseinrichtung und eines ID-Gebers.

Gemäß der Figur hat ein Fahrzeug 1 mindestens eine Fahrzeugtür 10, die durch ein Türschloss 9 ver- und entriegelt werden kann. Zur Fortbewegung des Fahrzeuges 1 dient ein Motor 8. Im Fahrzeug 1 ist eine Berechtigungseinrichtung 2 für schlüssellosen Zugang und Start des Fahrzeugs 1 angeordnet. Die Berechtigungseinrichtung 2 wirkt auf das mindestens eine Türschloss 9 zur Kontrolle des Zugangs über die Fahrzeugtür 10 und mittelbar oder unmittelbar auf den Motor 8 zur Kontrolle des Starts ein. Ein von einem Benutzer tragbarer ID-Geber 3 hat Sende-/Empfangsmittel 6, die mit korrespondierenden Sende-/Empfangsmitteln 7 im Fahrzeug 1 eine drahtlose Kommunikationsverbindung 5 aufbauen können. Die fahrzeugseitigen Sende-/Empfangsmittel 7 werden von der Berechtigungseinrichtung 2 gesteuert, so dass die Berechtigungseinrichtung 2 mittels diesen mit dem ID-Geber 3 Datentelegramme über die Kommunikationsverbindung 5 austauschen kann. Der ID-Geber 3 weist weiterhin einen Bewegungssensor 4 auf, der einen Zeitpunkt eines letztmaligen Bewegens des ID-Gebers 3 erfassen kann. Wünscht der Benutzer einen schlüssellosen Zugang zum Fahrzeug 1, so erfragt die Berechtigungseinrichtung 2 den Zeitpunkt des letztmaligen Bewegens von dem innerhalb der Reichweite der Sende-/Empfangsmittel 7 befindlichen ID-Geber 3 und vergleicht diesen mit einem hinterlegten Zeitintervall. Liegt der Zeitpunkt innerhalb des Zeitintervalls wird der Zugang gewährt. Liegt der Zeitpunkt außerhalb des Zeitintervalls wird der Zugang verwehrt.

Gemäß einem nicht erfindungsgemäßen Beispiel wertet der ID-Geber das Zeitintervall aus und sendet eine positive oder negative bzw. keine Antwort in Abhängigkeit des Auswerteergebnisses. Der Benutzer müsste in letzterem Fall entweder den ID-Geber 3 bewegen oder eine manuelle Entriegelung des mindestens einen Türschlosses 9 mittels eines am ID-Geber 3 angeordneten Betätigungstasters 11 vornehmen. Der weitere Betätigungstaster 11 dient dem manuellen Verriegeln des mindestens einen Türschlosses 9. Der Motor 8 kann im Folgenden nur schlüssellos gestartet werden, wenn die letzte Entriegelung des mindestens einen Türschlosses 9 durch denselben ID-Geber 3 schlüssellos oder manuell erfolgt ist. Ansonsten muss der Motor 8 manuell, beispielsweise über ein nicht dargestelltes Zündschloss, gestartet werden. Wird das mindestens eine Türschloss 9 verriegelt, dann verwirft die Berechtigungseinrichtung 2 die Berechtigung des ID-Gebers 3 zum schlüssellosen Start.

### Liste der Bezugszeichen:

- 1: Fahrzeug
- 2: Berechtigungseinrichtung
- 3: ID-Geber
- 4: Bewegungssensor
- 5: Kommunikationsverbindung
- 6: Sende-/Empfangsmittel
- 7: Sende-/Empfangsmittel
- 8: Motor
- 9: Türschloss
- 10: Fahrzeugtür
- 11: Betätigungstaster

## Patentansprüche

1. Verfahren zum Betreiben einer Berechtigungseinrichtung (2) für schlüssellosen Zugang und Start eines Fahrzeugs (1) mit einem tragbaren ID-Geber (3), der einen Bewegungssensor (4) aufweist, wobei zwischen Berechtigungseinrichtung (2) und ID-Geber (3) eine drahtlose Kommunikationsverbindung (5) zum Austauschen von Datentelegrammen aufgebaut werden kann und wobei der schlüssellose Zugang zum Fahrzeug (1) nur dann zulässig ist, wenn ein Zeitpunkt einer von dem Bewegungssensor (4) erfassten, letztmaligen Bewegung des ID-Gebers (3) innerhalb eines festgelegten Zeitintervalls liegt, wobei die Berechtigungseinrichtung (2) den schlüssellosen Start des Fahrzeugs (1) immer dann zulässt, wenn zuvor der schlüssellose Zugang zum Fahrzeug zugelassen wurde,
**dadurch gekennzeichnet, dass**
die Berechtigungseinrichtung (2) den Zeitpunkt vom ID-Geber (3) empfängt und mit dem Zeitintervall abgleicht.

2. Verfahren nach Anspruch 1, **dadurch gekennzeichnet, dass** nur der ID-Geber (3) zum schlüssellosen Start zugelassen ist, dem zuvor der schlüssellose Zugang gewährt wurde.

3. Verfahren nach einem der vorhergehenden Ansprüche, **dadurch gekennzeichnet, dass** der schlüssellose Start nach einem manuellen Zugang mit demselben ID-Geber (3) immer zugelassen ist.

4. Verfahren nach einem der vorhergehenden Ansprüche, **dadurch gekennzeichnet, dass** das Zeitintervall mittels eines RC-Gliedes überwacht wird.

5. Fahrzeug (1) mit einer Berechtigungseinrichtung (2), die dazu ausgelegt ist, ein Verfahren nach einem der vorstehenden Ansprüche durchzuführen.

## Claims

1. A method for operating an authorization device (2) for a keyless access and start of a vehicle (1), comprising a portable ID transmitter (3), which has a movement sensor (4), wherein a wireless communication connection (5) can be established between the authorization device (2) and the ID transmitter (3) in order to exchange data telegrams and wherein the keyless access to the vehicle (1) is allowed only if a point in time of a last ID transmitter (3) movement detected by the movement sensor (4) lies within a specified time interval, wherein the authorization device (2) allows the keyless start of the vehicle (1) only if the keyless access to the vehicle was allowed beforehand,
**characterized in that**
the authorization device (2) receives the point in time from the ID transmitter (3) and aligns with the time interval.

2. A method according to claim 1, **characterized in that** only the ID transmitter (3) is allowed for the keyless start, to which the keyless access was granted beforehand.

3. A method according to one of the preceding claims, **characterized in that** the keyless start is always allowed after a manual access with the same ID transmitter (3).

4. A method according to one of the preceding claims, **characterized in that** the time interval is monitored by means of an RC element.

5. A vehicle (1), having an authorization device (2), which is designed to implement a method according to one of the preceding claims.

## Revendications

1. Procédé de fonctionnement d'un dispositif d'autorisation (2) pour un accès sans clé et un démarrage sans clé d'un véhicule (1) avec un transmetteur d'identification portable (3) qui comporte un capteur de mouvement (4), une liaison de communication sans fil (5) pouvant être établie entre le dispositif d'autorisation (2) et le transmetteur d'identification (3) pour l'échange de télégrammes de données et l'accès sans clé au véhicule (1) n'étant autorisé que si l'instant d'un dernier mouvement, détecté par le capteur de mouvement (4), du transmetteur d'identification (3) se situe dans un intervalle de temps fixé, le dispositif d'autorisation (2) autorisant toujours le démarrage sans clé du véhicule (1) lorsque l'accès sans clé au véhicule a été autorisé auparavant,
**caractérisé en ce que** le dispositif d'autorisation (2) reçoit l'instant du transmetteur d'identification (3) et le compare à l'intervalle de temps.

2. Procédé selon la revendication 1, **caractérisé en ce que** le démarrage sans clé n'est autorisé que pour le transmetteur d'identification (3) auquel l'accès sans clé a été accordé auparavant.

3. Procédé selon l'une des revendications précédentes, **caractérisé en ce que** le démarrage sans clé est toujours autorisé après un accès manuel avec le même transmetteur d'identification (3).

4. Procédé selon l'une des revendications précédentes, **caractérisé en ce que** l'intervalle de temps est contrôlé au moyen d'un élément RC.

5. Véhicule (1) avec un dispositif d'autorisation (2) qui est conçu pour mettre en oeuvre un procédé selon l'une des revendications précédentes.
